# EUROPÄISCHE PATENTANMELDUNG

(11) **EP 3 486 551 A1**
(43) Veröffentlichungstag der Anmeldung: **22.05.2019**
(21) Anmeldenummer: 17202738.5
(22) Anmeldetag: 21.11.2017
(51) Int. Cl.: F21S 8/06, A01G 7/04, F21Y 115/10, F21Y 107/20, F21Y 113/13

(54) **BELEUCHTUNGSVORRICHTUNG GEEIGNET ZUR FÖRDERUNG DES PFLANZENWACHSTUMS VON NUTZPFLANZEN**

(71) Anmelder: Bähr, Johannes, 68199 Mannheim (DE); Bronich, Anton, 67346 Speyer (DE)
(72) Erfinder: Bähr, Johannes, 68199 Mannheim (DE); Bronich, Anton, 67346 Speyer (DE)
(74) Vertreter: Patentanwälte Dr. Keller, Schwertfeger Partnerschaft mbB

(57) **Zusammenfassung**

Die Erfindung betrifft eine Beleuchtungsvorrichtung und eine Verwendung dieser zur Förderung des Pflanzenwachstums von Nutzpflanzen, umfassend einen lichtemittierenden Dioden (LED)-Träger (2) mit einer gewölbten Oberfläche und einer Vielzahl an der Oberfläche angeordneten LEDs (3), die Licht unterschiedlicher Wellenlängen abstrahlen, wobei die Oberfläche des LED-Trägers (2) mit einer Kombination von LEDs (3) bestückt ist, die folgende Abstrahleigenschaften aufweisen:
a. LEDs mit einem Breitbandspektrum zwischen 2.700 K und 6.500 K,
b. LEDs mit einem ersten Schmalbandspektrum zwischen 440 nm und 465 nm,
c. LEDs mit wenigstens einem weiteren Schmalbandspektrum zwischen 615 nm und 640 nm und/oder zwischen 650 nm und 675 nm.

## Beschreibung

Die vorliegende Erfindung betrifft eine Beleuchtungsvorrichtung und deren Verwendung zur Förderung des Pflanzenwachstums von Nutzpflanzen.

Eine künstliche Belichtung von Pflanzen wird in Gewächshäusern als Ergänzung zum natürlichen Tageslicht eingesetzt, um eine durch eine Verlängerung der Tageslängen oder Erhöhung der Lichtsummen bedingte Wachstums- oder Ertragssteigerung zu erreichen. Bislang werden zu diesem Zweck im Wesentlichen Natriumdampf-Hochdrucklampen, zum Teil aber auch lichtemittierende Dioden (LEDs) eingesetzt.

Die heutigen LED-Leuchtmittel sind den herkömmlichen Leuchtstoffröhren in vielerlei Hinsicht überlegen. So weisen sie einen deutlich geringeren Stromverbrauch auf und verfügen über eine längere Lebensdauer. Daneben sind sie unmittelbar nach dem Einschalten einsatzbereit. Auch sind LED-Leuchtmittel heutzutage als Weißlicht-LEDs auf dem Markt verfügbar und sogar in vielen verschiedenen Farbtemperaturen erhältlich.

Alternativ dazu können RGB-LEDs mit roten, grünen und blauen Leuchtdioden in einem LED-Gehäuse miteinander so kombiniert werden, dass sich ihr Licht gut mischt und bei entsprechender Ansteuerung der einzelnen Leuchtdioden von außen als weiß erscheint. Ein LED-Leuchtmittel, welches in Lichtfarbe und Strahlwirkung einer herkömmlichen Glühlampe entspricht, wird beispielsweise in der DE 10 2012 019 670 A1 offenbart.

Dennoch können einzelne LEDs verzweigte und heterogen aufgebaute Nutzpflanzen nur bedingt in einem Maße beleuchten, dass die meisten Pflanzenteile belichtet werden. Außerdem stellen Pflanzen, insbesondere Nutzpflanzen, hohe Anforderungen an die Lichtqualität der Strahlenquelle.

Demnach liegt der Erfindung die Aufgabe zugrunde, eine verbesserte Beleuchtungsvorrichtung bereit zu stellen, die effektiv das Wachstum von Pflanzen fördert und einen geringen Energiebedarf aufweist.

Diese Aufgabe wird gelöst durch eine Beleuchtungsvorrichtung gemäß Anspruch 1 und deren Verwendung gemäß Anspruch 11. Bevorzugte Ausführungsformen finden sich in den Unteransprüchen wieder.

Ein Kerngedanke der vorliegenden Erfindung besteht darin, eine Beleuchtungsquelle bereitzustellen, die ein intensives Licht bei gleichzeitig divergentem Abstrahlverhalten emittiert, um die zu behandelnden Nutzpflanzen möglichst vollständig mit Licht zu bestrahlen. Dies gelingt erfindungsgemäß dadurch, dass ein lichtemittierender Dioden (LED)-Träger mit einer gewölbten Oberfläche und einer Vielzahl an der Oberfläche angeordneter LEDs vorgesehen ist. In der Summe aller LEDs wird mittels der gewölbten Form des LED-Trägers und der Vielzahl der LEDs ein divergentes, aber sehr intensives Abstrahlverhalten der Beleuchtungsvorrichtung realisiert. Die Beleuchtungsvorrichtung selbst ist äußert energiesparend und weist einen hohen Wirkungsgrad auf.

Ein weiterer Kerngedanke der Erfindung besteht darin, LED-Strahlungsquellen unterschiedlicher Lichtfarben und Farbtemperaturen so zusammenzustellen, dass das Wachstum von Nutzpflanzen gezielt gefördert wird. Dies wird dadurch erreicht, dass die Oberfläche des LED-Trägers mit einer Kombination von LEDs bestückt ist, die folgende Abstrahleigenschaften aufweisen:
a. LEDs mit einem Breitbandspektrum zwischen 2.700 K und 6.500 K,
b. LEDs mit einem ersten Schmalbandspektrum zwischen 440 nm und 465 nm,
c. LEDs mit wenigstens einem weiteren Schmalbandspektrum zwischen 615 nm und 640 nm und/oder zwischen 650 nm und 675 nm.

Demnach sind erfindungsgemäß auf der Oberfläche des LED-Trägers weiße LEDs unterschiedlicher Weißtöne (z.B. Warmweiß, Neutralweiß, Tageslichtweiß) angeordnet, die in ihrem Emissionsspektrum naturgemäß sehr breitbandig sind. Dadurch ist eine Grundversorgung der Nutzpflanze mit den für sie besonders erhaltungsrelevanten Lichtfrequenzen gewährleistet. Überaschenderweise haben die Erfinder festgestellt, dass eine Kombination der breitbandigen LEDs mit weiteren LEDs, die ausgewählte Maxima im Blau- und Rotbereich des Spektrums aufweisen, für die Pflanzen besonders wachstumsfördernd ist. Erfindungsgemäß sind zusätzliche LEDs vorgesehen, die ein schmalbandiges Emissionsspektrum im Blaubereich und im Rotbereich aufweisen, um diese für die Nutzpflanze besonders wichtigen Lichtbereiche zu intensivieren. Die ausgewählten Wellenlängenbereiche regen die Photosynthese der Pflanze effektiv an und fördern somit die Energieversorgung und letztlich deren Wachstum.

Je nach Pflanzenart und Wachstumsphasen, gibt es bevorzugte Varianten der Beleuchtungsvorrichtung, wobei sich eine Kombination von LEDs mit folgenden Abstrahleigenschaften als besonders optimal herausgestellt hat:
a. LEDs mit einem Breitbandspektrum zwischen 2.700 K und 6.500 K,
b. LEDs mit einem ersten Schmalbandspektrum zwischen 450 nm und 455 nm,
c. LEDs mit einem zweiten Schmalbandspektrum zwischen 625 nm und 630 nm,
d. LEDs mit einem dritten Schmalbandspektrum zwischen 660 nm und 665 nm.

Vorzugsweise weist der LED-Träger einen in Abstrahlrichtung orientierten Plateau-Bereich auf. Aufgrund der fehlenden Wölbung in diesem Bereich und dem generell schmalen Abstrahlverhalten der LEDs wird von diesem Plateau-Bereich ausgehend nahezu das gesamte Licht der Beleuchtungsvorrichtung auf die Nutzpflanze emittiert.

Damit auch der Pflanzenbereich, der von der Pflanzenhauptachse weiter entfernt ist, oder auch umliegende Nutzpflanzen mit ausreichend Licht versorgt werden, weist der Plateau-Bereich des LED-Trägers vorzugsweise eine Abschrägung auf, wobei der Winkel der Abschrägung relativ zum Plateau-Bereich zwischen 25° bis 65° beträgt, vorzugsweise zwischen 45° bis 55°. Diese doch recht flache Abschrägung sorgt dafür, dass ein breiter Lichtkegel vom LED-Träger ausgeht und ein Pflanzenfeld von 1,5 m² und mehr belichtet werden kann.

Vorzugsweise sind die LEDs an der Oberfläche des LED-Trägers zur Verbesserung der Abstrahlcharakteristik auf Erhebungen angeordnet, die über die Oberfläche des LED-Trägers wenigstens teilweise hervorragen. Eine solche Vorrichtung bietet eine Vielzahl an Gestaltungsmöglichkeiten, die Orientierung der LEDs so zu modifizieren, dass eine gewünschte Abstrahlcharakteristik der gesamten Beleuchtungsvorrichtung erreicht wird. So können beispielsweise einzelne LEDs höher angeordnet sein als andere benachbarte. Auch besteht die Möglichkeit, die Abstrahlcharakteristik der Beleuchtungsvorrichtung an die Größe einer zu beleuchtenden Nutzpflanze oder eines zu beleuchtenden Pflanzenfeldes anzupassen.

Bei Varianten mit einer hohen Anzahl an LEDs auf dem LED-Träger wird im Vergleich zu weniger zahlreich bestückten LED-Trägern eine hohe Betriebstemperatur der Beleuchtungsvorrichtung erreicht, die negative Folgen auf die Langlebigkeit der LEDs haben könnte. Um die Betriebstemperatur niedrig zu halten, gleichzeitig aber auch die erwünschte Energieeffizienz zu gewährleisten, ist der LED-Träger vorzugsweise mit einem Leuchtenkörper verbunden, der mit einer passiven Kühlung für den LED-Träger ausgestattet ist. Durch diese Bauform wird ein Einbau von Energieverbrauchern in Form von Kühlvorrichtungen vermieden. Vorteilhafterweise wird die Passivkühlung durch den Leuchtenkörper selbst realisiert. Dies wird vorzugsweise durch die Wahl seiner spezifischen Form und der verwendeten Materialien verwirklicht. Hierbei eignen sich Materialien die gute Wärmeleiter sind, wie beispielsweise Aluminium.

Um die Langlebigkeit der LEDs auch bei ungünstigen Umgebungseinflüssen zu gewährleisten, sind die LEDs mit einem wärmebeständigen transparenten Schutz überzogen. So sind die LEDs selbst dann geschützt, wenn die Nutzpflanzen beispielsweise durch Sprinkleranlagen bewässert werden und somit die Gefahr besteht, dass die LEDs unmittelbar Nässe oder hoher Luftfeuchtigkeit ausgesetzt sind.

Bei einer bevorzugten Ausführungsform ist der LED-Träger der erfindungsgemäßen Beleuchtungsvorrichtung in einer Kammer mit reflektierenden Wänden angeordnet, sodass das Innere der Kammer nahezu vollständig ausgeleuchtet wird. Aufgrund der Reflexionen innerhalb der Kammer wird gewährleistet, dass eine darin eingebrachte Nutzpflanze vollständig von der erfindungsgemäßen Beleuchtungsvorrichtung beleuchtet werden kann.

Die Kombination und Durchmischung der verschiedenen LEDs auf dem LED-Träger hat sich als besonders vorteilhafte Anordnung herausgestellt. In einer bevorzugten Variante sind die breitbandigen und schmaldbandigen LEDs auf dem LED-Träger alternierend und in einzelnen Reihen umlaufend auf der Oberfläche des LED-Trägers angeordnet. Auch andere Anordnungen oder Auswahl von LEDs sind vom Gedanken der Erfindung erfasst.

In einer bevorzugten Ausführungsform weist die Beleuchtungsvorrichtung einen Wirkungsgrad von mehr als 40 Im/W und/oder einen Lichtstrom von mehr als 8.000 Im bei einem Abstrahlwinkel zwischen 115 und 120°, vorzugsweise etwa 117°, auf.

Nutzpflanzen haben je nach Entwicklungsphase, d.h. ob sie sich in der Blütephase oder in der Wachstumsphase befinden, unterschiedliche Bedürfnisse an die Lichtstärke und Lichtqualität. Es ist daher vorteilhaft, dass die erfindungsgemäße Beleuchtungsvorrichtung mehrere Schaltstufen aufweist, um die unterschiedlichen Entwicklungsphasen abzufangen.

Als erste Schaltstufe hat sich als optimal erwiesen, wenn die LEDs des Breitbandspektrums mit einer Farbtemperatur von 2.700 K und 6.500 K mit einem Leistungsverhältnis von wenigstens 2 zu 1 und die LEDs der Schmalbandspektren mit einem Leistungsverhältnis von 1 zu 1 betrieben werden, wobei die Gesamtleistung der LEDs mit einem Schmalbandspektrum zur maximalen Leistungsaufnahme der Beleuchtungsvorrichtung in einem Bereich zwischen 5 bis 25 % liegt.

Versuche haben ferner gezeigt, dass sich die erste Schaltstufe positiv auf das Wachstum der Pflanze auswirkt. Die wachstumsfördernde Wirkung konnte weiter gesteigert werden, indem die erste Schaltstufe mit einer zweiten Schaltstufe abgewechselt wurde, bei der die LEDs des Breitbandspektrums mit einer Farbtemperatur von 2.700 K und 6.500 K mit einem Leistungsverhältnis von wenigstens 5 zu 1 und die LEDs der Schmalbandspektren mit einem Leistungsverhältnis von 2 zu 1 betreibbar sind, wobei die Gesamtleistung der LEDs mit einem Schmalbandspektrum zur maximalen Leistungsaufnahme der Beleuchtungsvorrichtung in einem Bereich zwischen 15 bis 10 % liegt.

Es versteht sich, dass weitere Schaltstufen denkbar sind, die den erwünschten Zweck, das Pflanzenwachstum zu fördern, erfüllen.

Gegenstand der vorliegenden Erfindung ist auch die Verwendung einer erfindungsgemäßen Beleuchtungsvorrichtung zur gezielten Förderung des Pflanzenwachstums in den einzelnen Entwicklungsphasen der Pflanze.

Die Erfindung wird in den nachfolgenden Ausführungsbeispielen näher erläutert.
Fig. 1 zeigt eine Ausführungsform der erfindungsgemäßen Beleuchtungsvorrichtung 1 in Seitenansicht;
Fig. 2 zeigt den LED-Träger der Fig. 1 in Draufsicht;
Fig. 3 zeigt ein Emissionsspektrum einer Ausführungsform der erfindungsgemäßen Beleuchtungsvorrichtung;
Fig. 4 zeigt die Abstrahlcharakteristik der Ausführungsform entsprechend dem Diagramm in Fig. 3;
Fig. 5 zeigt eine Ausführungsform, bei der die Beleuchtungsvorrichtung mit einer Kammer gekoppelt ist.

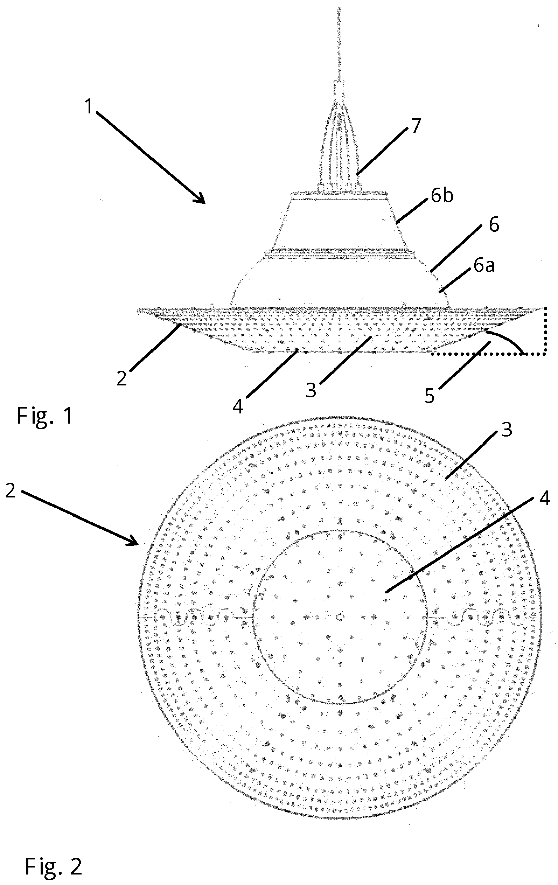

Fig. 1 zeigt eine Beleuchtungsvorrichtung 1 in Seitenansicht. Die Beleuchtungsvorrichtung 1 umfasst einen Leuchtenkörper 6, einen LED-Träger 2 und eine Aufhängung 7. Der Leuchtenkörper 6 setzt sich aus einem halbellipsoiden Unterkörper 6a und einem sich oberhalb befindlichen, hemisphärischen Oberkörper 6b zusammen, der wiederum nach oben hin, im Bereich der Aufhängung 7, abgeflacht ist. Der Durchmesser des Oberkörpers 6b ist geringer als der Durchmesser des Unterkörpers 6a. Die Form des Leuchtenkörpers 6 ist so gestaltet, dass der Leuchtenkörper 6 eine große Außenfläche aufweist, um überschüssige thermische Energie effektiv an die Umgebung abzugeben. Andere hier nicht dargestellte, zweckmäßige Geometrien sind vom Erfindungsgedanken mitinbegriffen.

Aufgrund der gewölbten Form des Leuchtenkörpers 6 und der Tatsache, dass er aus einem wärmeleitenden Material besteht, ist er in der Lage, den LED-Trägers passiv zu kühlen.

Der LED-Träger 2 weist einen in Abstrahlrichtung orientierten Plateau-Bereich 4 mit einer Abschrägung 5 auf. Die maximale Ausdehnung des LED-Trägers 2, also die Länge von Spitze zu Spitze, beträgt zwischen 40 bis 80 cm. Die Länge des Plateau-Bereichs 4 beträgt zwischen 10 bis 40 cm. Die Höhe des LED-Trägers 2 beziffert sich zwischen 4 bis 8 cm. Die Abschrägung 5 um den Plateau-Bereich 4 beträgt zwischen 25° bis 65°. Eine solche Ausgestaltung ermöglicht es, ein Pflanzenfeld von ungefähr 1,5 m² mit intensivem Licht zu versorgen. Es versteht sich, dass hiervon abweichende Dimensionen den Zweck dieser Erfindung ebenfalls realisieren und vom Erfindungsgedanken mitinbegriffen sind.

Auf der Oberfläche des LED-Trägers 2 sind eine Vielzahl an LEDs 3 angeordnet (als Punkte dargestellt). Bei den LEDs 3 handelt es sich um Hochleistungs-LEDs. Dabei erzeugt jede einzelne LED 3 in der Regel einen schmalen Lichtkegel. Aufgrund der großen Anzahl an LEDs 3 und der besonderen Form des LED-Trägers 2 wird ein divergentes Abstrahlverhalten der Beleuchtungsvorrichtung 1 erreicht.

Fig. 2 zeigt den LED-Träger 2 in Draufsicht. Der eingezeichnete innere Kreis repräsentiert den Plateau-Bereich 4 mit einem angedeuteten Mittelpunkt in seinem Zentrum. Idealerweise wird die Beleuchtungsvorrichtung 1 so über die Pflanze angeordnet (nicht gezeigt), dass eine gedachte Normale auf dem eingezeichneten Mittelpunkt eine Verlängerung der Hauptachse der Pflanze darstellt. Durch diese Maßnahme wird die Pflanze angeregt, senkrecht nach oben zu wachsen, denn die LEDs 3 weisen einen schmalen Abstrahlwinkel auf und leuchten, aufgrund der Tatsache, dass der Plateau-Bereich 4 eben ist, senkrecht nach unten auf die Pflanze. Weitere Pflanzen können um diese ausgerichtete Pflanze angeordnet werden.

Der LED-Träger 2 ist mit LEDs 3 mit einem Breitbandspektrum zwischen 2.700 K und 6.500 K und mit LEDs mit einem ersten Schmalbandspektrum zwischen 440 nm und 465 nm und LEDs mit einem zweiten Schmalbandspektrum zwischen 615 nm und 640 nm und/oder zwischen 650 nm und 675 nm besetzt.

Als geeignete Beleuchtung einer Mengung von unterschiedlichen Nutzpflanzen hat sich eine Kombination von LEDs, bestehend aus LEDs mit einem Breitbandspektrum zwischen 2.700 K und 6.500 K und mit LEDs mit einem ersten Schmalbandspektrum zwischen 450 nm und 455 nm und mit LEDs mit einem zweiten Schmalbandspektrum zwischen 625 nm und 630 nm und mit LEDs mit einem dritten Schmalbandspektrum zwischen 660 nm und 665 nm, erwiesen.

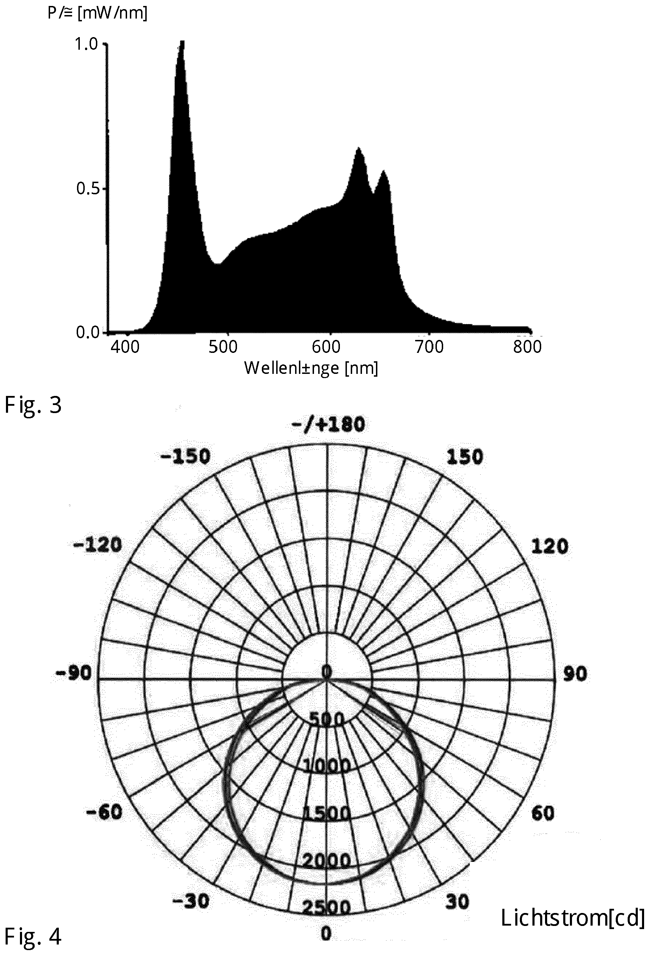

In Fig. 3 ist ein Emissionsspektrum einer bevorzugten Ausführungsform einer erfindungsgemäßen Beleuchtungsvorrichtung gezeigt. Die Ordinate zeigt skaliert das Verhältnis der emittierten Leistung zur Wellenlänge in [mW/nm] an. Hierbei entspricht der Skalenwert 1.0 einem Wert von 318 mW/nm. Auf der Abszisse sind die verschiedenen Wellenlängen in [nm] aufgetragen. Das Emissionsspektrum weist sein absolutes Maximum im Blaubereich bei 455 nm auf. Die durchschnittliche Wellenlänge des gezeigten Emissionsspektrums liegt im Gelb-Grünbereich bei 563 nm. Zum Erhalt dieses Spektrums wurde die Beleuchtungsvorrichtung mit einer Spannung von 229 V und einem Strom von 1,24 A betrieben. Die emittierte Leistung beträgt 169 W, der gemessene Lichtstrom beziffert sich auf 8940 Im, was einem Wirkungsgrad von 52,9 Im/W entspricht.

Fig. 4 zeigt die zugehörige Abstrahlcharakteristik der Beleuchtungsvorrichtung. Es ist deutlich zu erkennen, dass der Bereich zwischen -60° bis +60°, was einem Abstrahlwinkel von ungefähr 120° entspricht, gleichmäßig und mit ausreichender Lichtstärke versorgt ist.

In einer bevorzugten Weiterbildung ist angedacht, die Beleuchtungsvorrichtung 1 mit zwei Schaltstufen zu betreiben. Exemplarisch sind in Tabelle 1 die konkreten Leistungsverteilungen zweier Schaltstufen einer bevorzugten Ausführungsform mit einer maximalen Leistungsaufnahme von 268 Watt aufgelistet.

Die Beleuchtungsvorrichtung 1 kann beispielsweise je nach Entwicklungsphase (Wachstumsphase oder Blütephase) der Nutzpflanze zwischen Schaltstufe I und Schaltstufe II umgeschaltet werden. Es kann aber auch sinnvoll sein, täglich oder in anderen Zeitrhythmen die Schaltstufen abzuwechseln.

**Tabelle 1:**

| **maximale Leistungsaufnahme: 268 W** | |
|---|---|
| **Schaltstufe I** | **Schaltstufe II** |
| 60 W für LEDs mit einer Farbtemperatur von 2.700 K | 152 W für LEDs mit einer Farbtemperatur von 2.700 K |
| 30 W für LEDs mit einer Farbtemperatur von 6.500 K | 30 W für LEDs mit einer Farbtemperatur von 6.500 K |
| 7 W für LEDs mit einem Emissionsmaximum bei 630 nm | 27 W für LEDs mit einem Emissionsmaximum bei 630 nm |
| 7 W für LEDs mit einem | 14 W für LEDs mit einem |

| | |
|---|---|
| Emissionsmaximum bei 460 nm | Emissionsmaximum bei 460 nm |
| 7 W für LEDs mit einem Emissionsmaximum bei 660 nm | 27 W für LEDs mit einem Emissionsmaximum bei 660 nm |

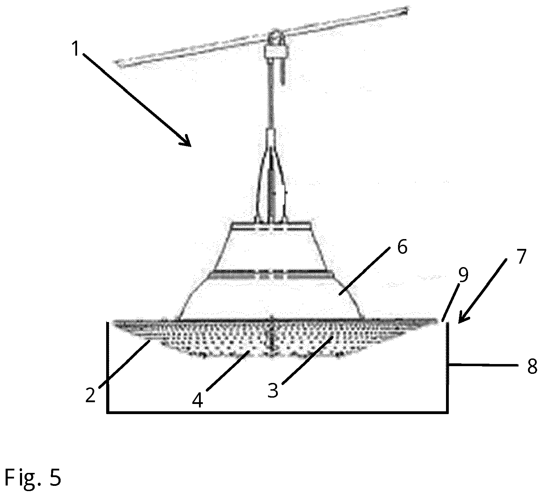

Fig. 5 zeigt eine Ausführungsform, bei der die Nutzpflanzen (nicht gezeigt) in einer Kammer angeordnet sind, die reflektierende Wände 8 aufweist. Das Innere der Kammer 7 wird durch die erfindungsgemäße Beleuchtungsvorrichtung 1, die durch die offene Seite 9 der Kammer 7 in den Kammerraum hineinreicht, ausgeleuchtet. Die Beleuchtungsvorrichtung 1 leuchtet das gesamte Kammerinnere entweder direkt oder aufgrund der Reflexionen des Lichts an den Kammerwänden 8 aus. Alternativ kann die Beleuchtungsvorrichtung 1 aber auch weit oberhalb der Kammer angeordnet sein und beispielsweise durch ein transparentes Fenster das Innere der Kammer ausleuchten.

## Patentansprüche

1. Beleuchtungsvorrichtung zur Förderung des Pflanzenwachstums von Nutzpflanzen, umfassend einen lichtemittierenden Dioden (LED)-Träger (2) mit einer gewölbten Oberfläche und einer Vielzahl an der Oberfläche angeordneter LEDs (3), die Licht unterschiedlicher Wellenlängen abstrahlen, **dadurch gekennzeichnet, dass** die Oberfläche des LED-Trägers (2) mit einer Kombination von LEDs (3) bestückt ist, die folgende Abstrahleigenschaften aufweisen:
a. LEDs mit einem Breitbandspektrum zwischen 2.700 K und 6.500 K,
b. LEDs mit einem ersten Schmalbandspektrum zwischen 440 nm und 465 nm,
c. LEDs mit wenigstens einem weiteren Schmalbandspektrum zwischen 615 nm und 640 nm und/oder zwischen 650 nm und 675 nm.

2. Beleuchtungsvorrichtung nach Anspruch 1, **dadurch gekennzeichnet, dass** die Kombination von LEDs (3) folgende Abstrahleigenschaften aufweisen:
a. LEDs mit einem Breitbandspektrum zwischen 2.700 K und 6.500 K,
b. LEDs mit einem ersten Schmalbandspektrum zwischen 450 nm und 455 nm,
c. LEDs mit einem zweiten Schmalbandspektrum zwischen 625 nm und 630 nm,
d. LEDS mit einem dritten Schmalbandspektrum zwischen 660 nm und 665 nm.

3. Beleuchtungsvorrichtung nach Anspruch 1 oder 2, **dadurch gekennzeichnet, dass** der LED-Träger (2) einen in Abstrahlrichtung orientierten Plateau-Bereich (4) mit einer Abschrägung (5) aufweist, wobei der Winkel der Abschrägung (5) relativ zum Plateau-Bereich (4) zwischen 25° bis 65° beträgt, vorzugsweise zwischen 45° bis 55°.

4. Beleuchtungsvorrichtung nach einem der vorhergehenden Ansprüche, **dadurch gekennzeichnet, dass** die LEDs (3) an der Oberfläche des LED-Trägers (2) zur Verbesserung der Abstrahlcharakteristik auf Erhebungen angeordnet sind, die über die Oberfläche des LED-Trägers hervorragen.

5. Beleuchtungsvorrichtung nach einem der vorhergehenden Ansprüche, **dadurch gekennzeichnet, dass** der LED-Träger (2) mit einem Leuchtenkörper (6) verbunden ist, der mit einer passiven Kühlung für den LED-Träger (2) ausgestattet ist.

6. Beleuchtungsvorrichtung nach einem der vorhergehenden Ansprüche, **dadurch gekennzeichnet, dass** die LEDs (3) mit einem wärmebeständigen transparenten Schutz überzogen sind.

7. Beleuchtungsvorrichtung nach einem der vorhergehenden Ansprüche, **dadurch gekennzeichnet, dass** der LED-Träger (2) in einer Kammer (7) mit reflektierenden Wänden (8) angeordnet ist.

8. Beleuchtungsvorrichtung nach einem der vorhergehenden Ansprüche, **dadurch gekennzeichnet, dass** die breitbandigen und schmalbandigen LEDs (3) auf dem LED-Träger (2) alternierend und in einzelnen Reihen umlaufend auf der Oberfläche des LED-Trägers (2) angeordnet sind.

9. Beleuchtungsvorrichtung nach einem der vorhergehenden Ansprüche, **dadurch gekennzeichnet, dass** sie einen Wirkungsgrad von > 40 Im/W und/oder ein Lichtstrom > 8000 Im bei einem Abstrahlwinkel zwischen 115 und 120°, vorzugsweise etwa 117° aufweist.

10. Beleuchtungsvorrichtung nach einem der vorhergehenden Ansprüche, **dadurch gekennzeichnet, dass** sie zur Erhöhung der Beleuchtungsstärke in der Wachstums- und Blütephase mehrere Schaltstufen aufweist:
a. eine erste Schaltstufe, bei der die LEDs (3) des Breitbandspektrum mit einer Farbtemperatur von 2.700 K und 6.500 K mit einem Leistungsverhältnis von wenigstens 2 zu 1 und die LEDs (3) der Schmalbandspektren mit einem Leistungsverhältnis von 1 zu 1 betreibbar sind, wobei die Gesamtleistung der LEDs (3) mit einem Schmalbandspektrum zur maximalen Leistungsaufnahme der Beleuchtungsvorrichtung (1) in einem Bereich zwischen 5 bis 25 % liegt;
b. eine zweite Schaltstufe, bei der die LEDs (3) des Breitbandspektrum mit einer Farbtemperatur von 2.700 K und 6.500 K mit einem Leistungsverhältnis von wenigstens 5 zu 1 und die LEDs (3) der Schmalbandspektren mit einem Leistungsverhältnis von 2 zu 1 betreibbar sind, wobei die Gesamtleistung der LEDs (3) mit einem Schmalbandspektrum zur maximalen Leistungsaufnahme der Beleuchtungsvorrichtung (1) in einem Bereich zwischen 15 bis 10 % liegt.

11. Verwendung einer Beleuchtungsvorrichtung gemäß einem der Ansprüche 1 bis 10 zur Förderung des Pflanzenwachstums von Nutzpflanzen.
